# EUROPEAN PATENT APPLICATION

(11) **EP 2 071 812 A1**
(43) Date of publication of application: **17.06.2009**
(21) Application number: 08171316.6
(22) Date of filing: 11.12.2008
(51) Int. Cl.: H04M 1/02, A44C 5/00

(54) **Mobile terminal in a bangle.**

(30) Priority: 14.12.2007 JP 2007324056
(71) Applicant: Sony Ericsson Mobile Communications Japan, Inc., Tokyo 108-0075 (JP)
(72) Inventor: Ohuchi, Maki, TOKYO 108-0075 (JP); Fukaya, Yuji, TOKYO 108-0075 (JP); Takanashi, Shin, TOKYO 108-0075 (JP)
(74) Representative: Beder, Jens

(57) **Abstract**

Disclosed is a mobile terminal including a ring section having a plurality of operation devices provided on a substantially circular enclosure, a terminal body section having at least a display device,a pair of hinge sections which have a rotation axis substantially parallel to a tangent line of a ring circumference direction of the ring section and rotatably journal the terminal body section at a rotation angle of at least 90 degrees with respect to the ring section, and a body-ring interface section which performs at least signal transmission between the ring section and the terminal body section.

## Description

### CROSS REFERENCES TO RELATED APPLICATIONS

The present invention contains subject matter related to Japanese Patent Application JP 2007-324056 filed in the Japanese Patent Office on December 14, 2007, the entire contents of which being incorporated herein by reference.

### BACKGROUND OF THE INVENTION

### 1. Field of the Invention

The present invention relates to a mobile terminal such as a mobile phone terminal having at least a display device such as a liquid crystal display and operation devices such as key buttons, and in particular, relates to a mobile terminal that can be worn on a user's arm or the like.

### 2. Description of the Related Art

In the past, Japanese Patent Application Laid-Open No. H10-51527 proposes a mobile phone unit that can be worn on a user's arm or the like.

In the mobile phone unit described in Japanese Patent Application Laid-Open No. H10-51527, a call section is provided separately from a phone body section, and the call section is connected to the phone body section through a dedicated radio channel. The call section is worn around the user's head by holding it to the user's glasses or ear, whereas the phone body section is worn on the user's arm. Further, the phone body section is formed like a ring, and an operation input section composed of a plurality of buttons is provided on a side surface (perpendicular to the display screen) of the ring-formed phone body section. When the phone body section is worn on the arm, the user can operate the operation input section with the hand of the other arm different from the arm on which the phone body section is worn.

### SUMMARY OF THE INVENTION

The above-described mobile phone unit is separated into the two sections of the call section and the phone body section, and it is assumed that the mobile phone terminal is used in a state where the call section is worn around the user's head. However, the usage of typically wearing the call section around the user's head is not common, the call section blocks the user's view, and it makes a strange appearance.

Further, while the exchange of information between the phone body section and the call section is performed by wireless communication or the like, there is some distance between the user's arm and the head, and the distance may vary with the movement of the user's arm. Furthermore, for example, some obstacle (e.g., a metallic bag which can obstruct wireless communication) may get in between the call section and the phone body section.

Accordingly, a certain amount of communication power is necessary for constant wireless communication. Further, various preventive measures need to be taken against crosstalk with other mobile phone units and radio intercept. To implement these requirements, it is unavoidable that the structure becomes larger and complicated and the unit cost increases.

Further, since the operation input section composed of a plurality of buttons is provided on the side surface of the ring-formed phone body section, when the user operates buttons of the operation input section in a state where the phone body section remains worn on the arm or while viewing screen display of the phone body section in a state where the phone body section is removed from the arm, the user has to depend only on the sensation of fingers to distinguish individual buttons. Further, since the user has to operate these buttons only with one hand when operating buttons of the operation input section in a state where the phone body section remains worn on the arm, the entry speed becomes lower, which greatly reduces convenience.

The present invention has been made in view of such circumstances, and it is desirable to provide a mobile terminal that can be worn on a user's arm or the like and can achieve high operability and convenience at a lower unit cost without making the structure larger and complicated.

A mobile terminal according to an embodiment of the present invention includes a ring section having a plurality of operation devices provided on a substantially circular enclosure, a terminal body section having at least a display device, a pair of hinge sections which have a rotation axis substantially parallel to a tangent line of a ring circumference direction of the ring section and rotatably journal the terminal body section at a rotation angle of at least 90 degrees with respect to the ring section, and a body-ring interface section which performs at least signal transmission between the ring section and the terminal body section.

That is, according to an embodiment of the invention, the ring section has the operation devices, the terminal body section has the display device, and the terminal body section can be rotated with respect to the ring section; therefore, the user can see display on the display device of the terminal body section while operating the operation devices of the ring section with fingers or the like.

In an embodiment of the invention, signal transmission can be performed between the ring section and the terminal body section by the body-ring interface section in a state where the terminal body section can be rotated with respect to the ring section by the hinge sections; therefore, the power for signal transmission is small and there is no need for a large structure or a complicated structure to maintain transmitted signal quality, which can restrain the structure from becoming larger and complicated and the unit cost from increasing.

Further, in an embodiment of the invention, the ring section has the operation devices, the terminal body section has the display device, and the terminal body section can be rotated with respect to the ring section; therefore, the user can see display on the display device of the terminal body section while operating the operation devices of the ring section with fingers or the like, which can achieve high operability and convenience.

### BRIEF DESCRIPTION OF THE DRAWINGS

Embodiments of the present invention will be described in detail based on the following figures, wherein:

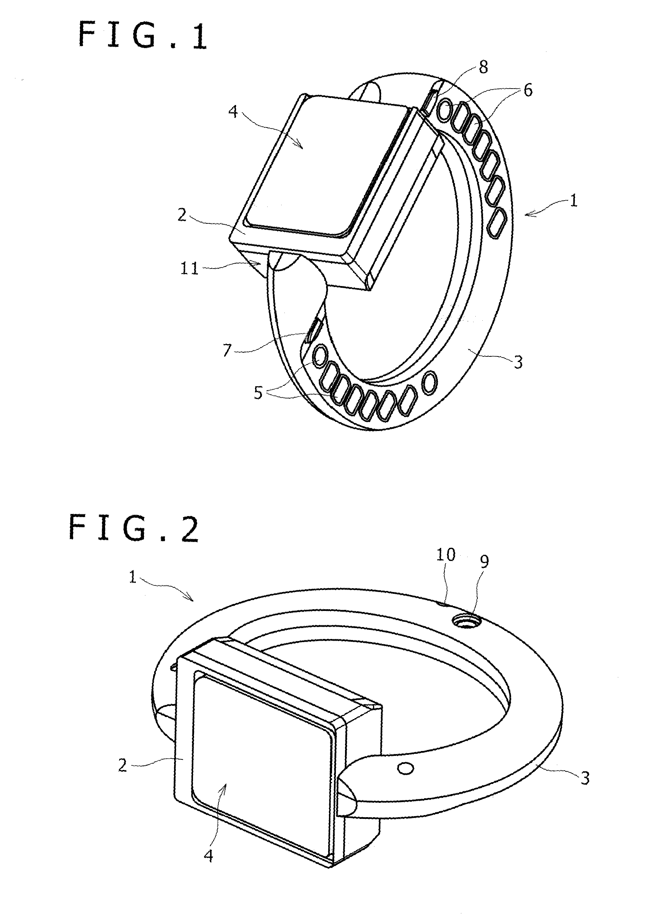

FIG. 1 is an external perspective view of a mobile phone terminal according to an embodiment in a state where a terminal body section is rotated such that the display surface of the terminal body section is substantially perpendicular to a two-dimensional plane including the circumference of a ring section and the ring center;
FIG. 2 is an external perspective view of the mobile phone terminal according to this embodiment when a camera section etc. of the ring section are turned upward in a state where the terminal body section is rotated such that the display surface of the terminal body section is substantially perpendicular to the two-dimensional plane including the circumference of the ring section and the ring center;

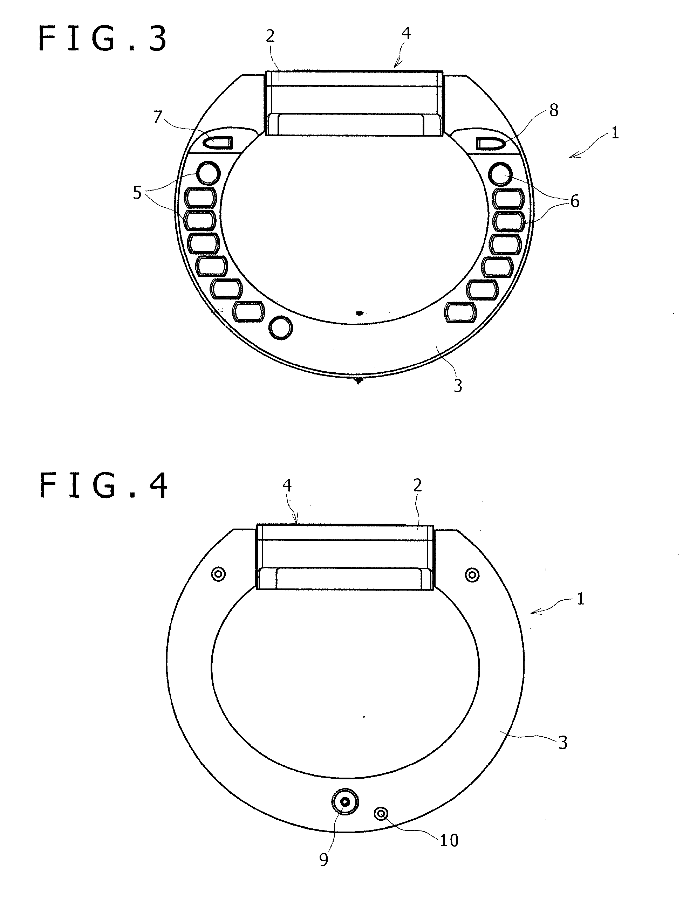

FIG. 3 is an external front view of the mobile phone terminal according to this embodiment in viewing the key buttons of the ring section in a state where the terminal body section is rotated such that the display surface of the terminal body section is substantially perpendicular to the two-dimensional plane including the circumference of the ring section and the ring center;
FIG. 4 is an external rear view of the mobile phone terminal according to this embodiment in viewing the camera section of the ring section in a state where the terminal body section is rotated such that the display surface of the terminal body section is substantially perpendicular to the two-dimensional plane including the circumference of the ring section and the ring center;

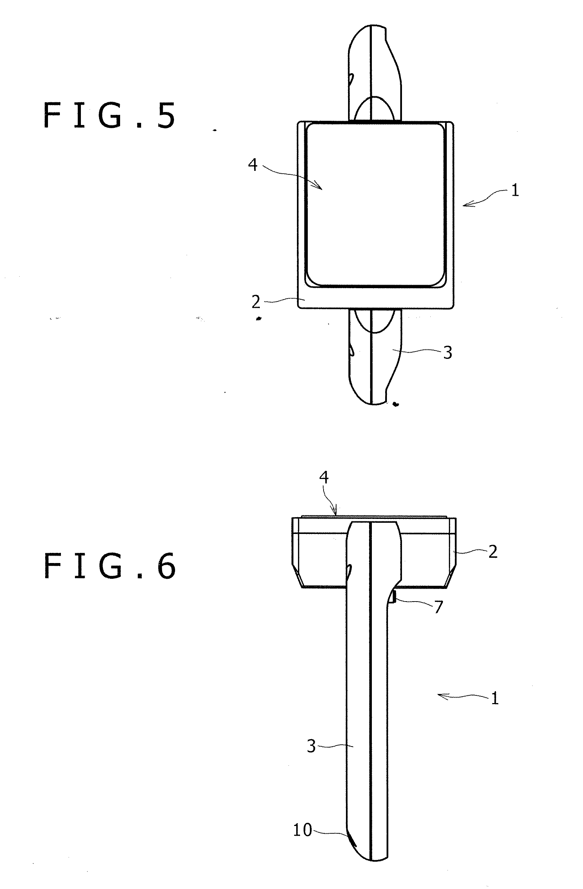

FIG. 5 is an external front view of the mobile phone terminal according to this embodiment in viewing the screen of the terminal body section in a state where the terminal body section is rotated such that the display surface of the terminal body section is substantially perpendicular to the two-dimensional plane including the circumference of the ring section and the ring center;
FIG. 6 is an external side view of the mobile phone terminal according to this embodiment in viewing a side of the terminal body section in a state where the terminal body section is rotated such that the display surface of the terminal body section is substantially perpendicular to the two-dimensional plane including the circumference of the ring section and the ring center;

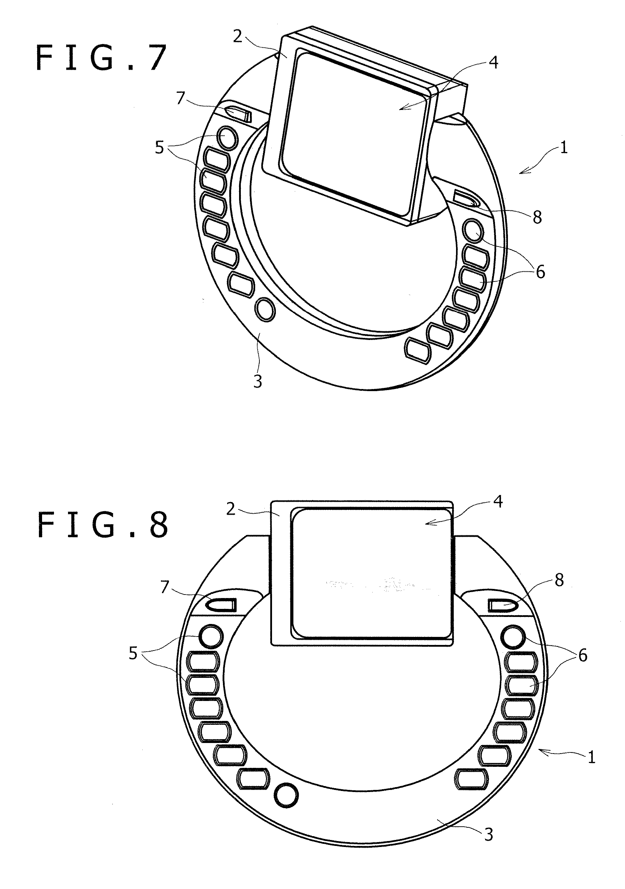

FIG. 7 is an external perspective view of the mobile phone terminal according to this embodiment in a state where the terminal body section is rotated such that the display surface of the terminal body section is substantially parallel to the two-dimensional plane including the circumference of the ring section and the ring center;
FIG. 8 is an external front view of the mobile phone terminal according to this embodiment in viewing the key buttons of the ring section in a state where the terminal body section is rotated such that the display surface of the terminal body section is substantially parallel to the two-dimensional plane including the circumference of the ring section and the ring center;

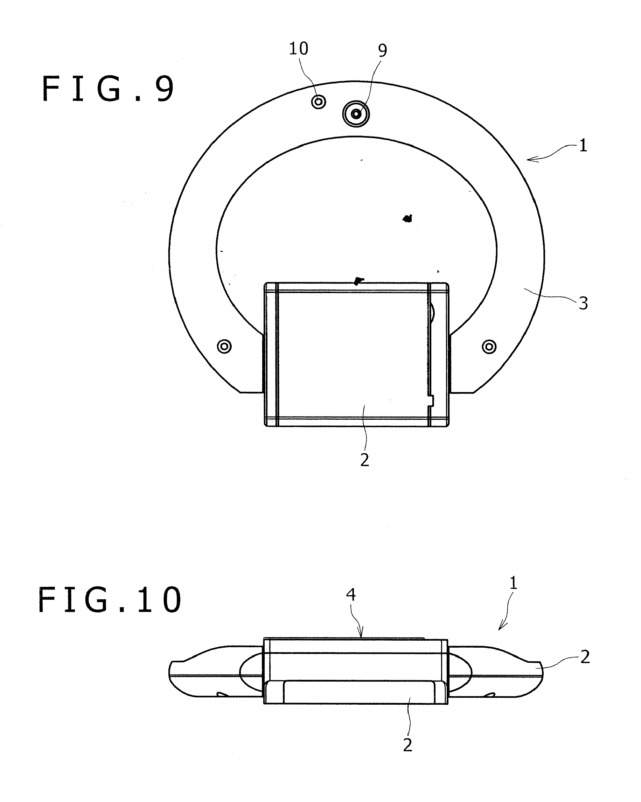

FIG. 9 is an external rear view of the mobile phone terminal according to this embodiment in viewing the camera section of the ring section in a state where the terminal body section is rotated such that the display surface of the terminal body section is substantially parallel to the two-dimensional plane including the circumference of the ring section and the ring center;
FIG. 10 is an external side view of the mobile phone terminal according to this embodiment in viewing the top of the terminal body section in a state where the terminal body section is rotated such that the display surface of the terminal body section is substantially parallel to the two-dimensional plane including the circumference of the ring section and the ring center;

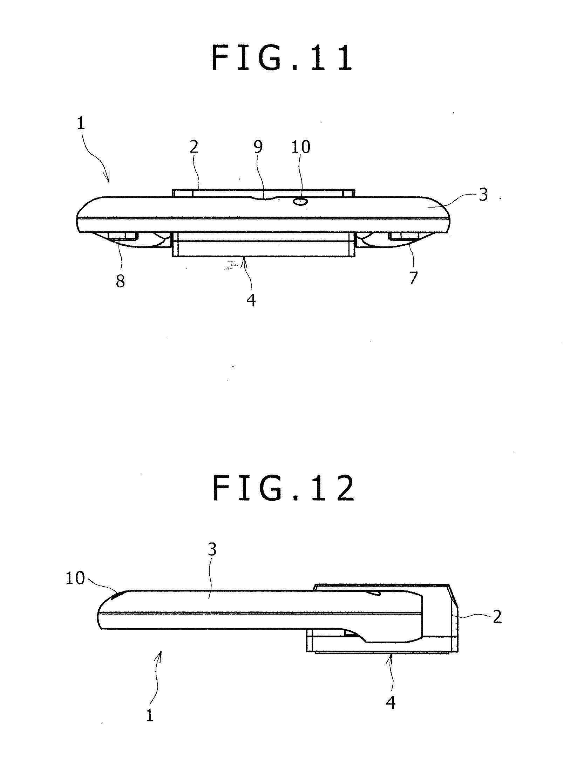

FIG. 11 is an external side view of the mobile phone terminal according to this embodiment in viewing the camera section of the ring section in a state where the terminal body section is rotated such that the display surface of the terminal body section is substantially parallel to the two-dimensional plane including the circumference of the ring section and the ring center;
FIG. 12 is an external side view of the mobile phone terminal according to this embodiment in viewing a side of the terminal body section in a state where the terminal body section is rotated such that the display surface of the terminal body section is substantially parallel to the two-dimensional plane including the circumference of the ring section and the ring center;

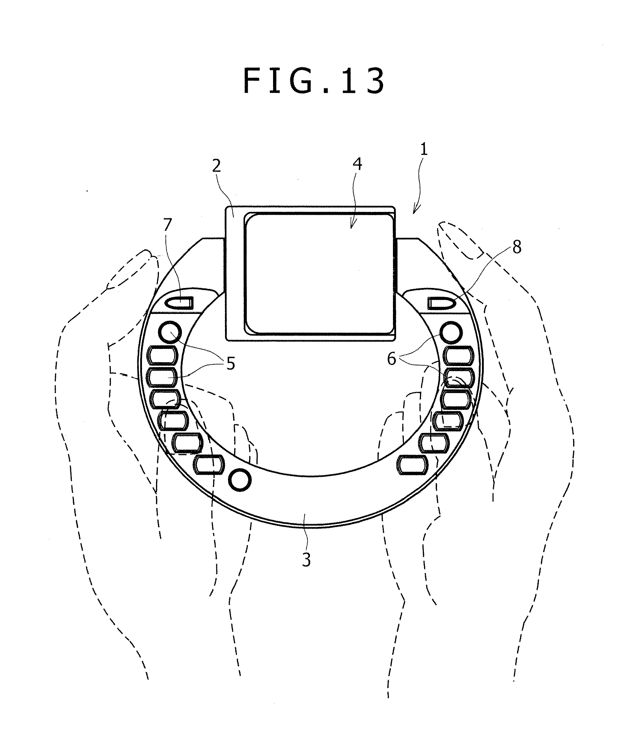

FIG. 13 is an illustration showing a state where a user holds the ring section of the mobile phone terminal according to this embodiment with both hands in a state where the terminal body section is rotated such that the display surface of the terminal body section is substantially parallel to the two-dimensional plane including the circumference of the ring section and the ring center;

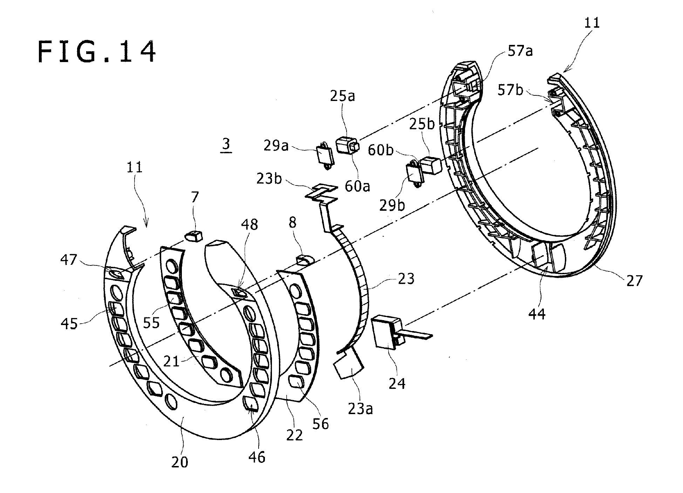

FIG. 14 is an exploded perspective view of the principal part of the ring section in the mobile phone terminal according to this embodiment;

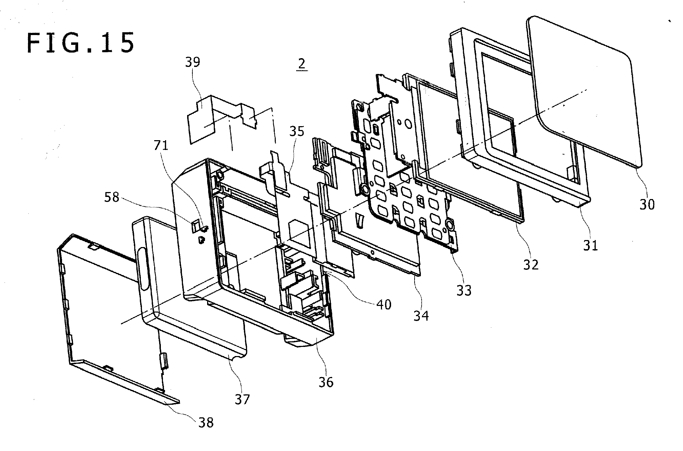

FIG. 15 is an exploded perspective view of the principal part of the terminal body section in the mobile phone terminal according to this embodiment;

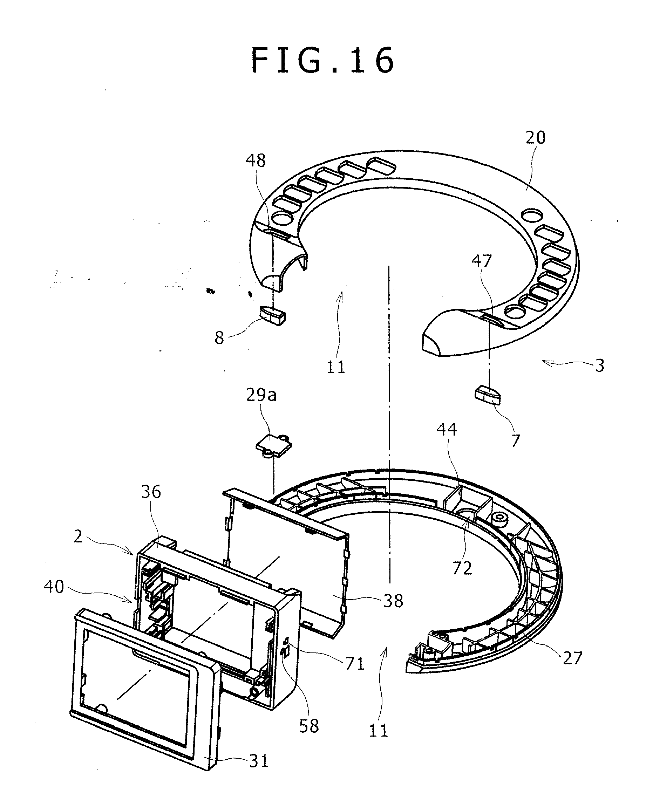

FIG. 16 is an exploded perspective view of part of the ring section and part of the terminal body section when the terminal body section is mounted on the ring section of the mobile phone terminal according to this embodiment;

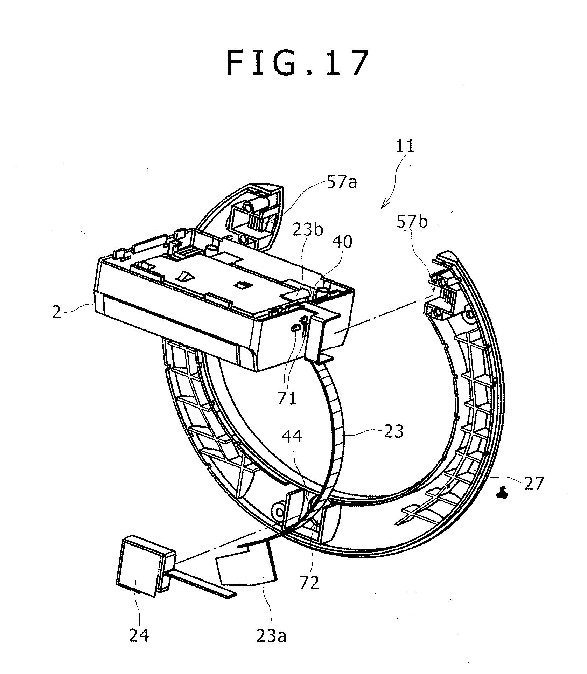

FIG. 17 is an exploded perspective view of part of the ring section and part of the terminal body section after partial assembly when the terminal body section is mounted on the ring section of the mobile phone terminal according to this embodiment;

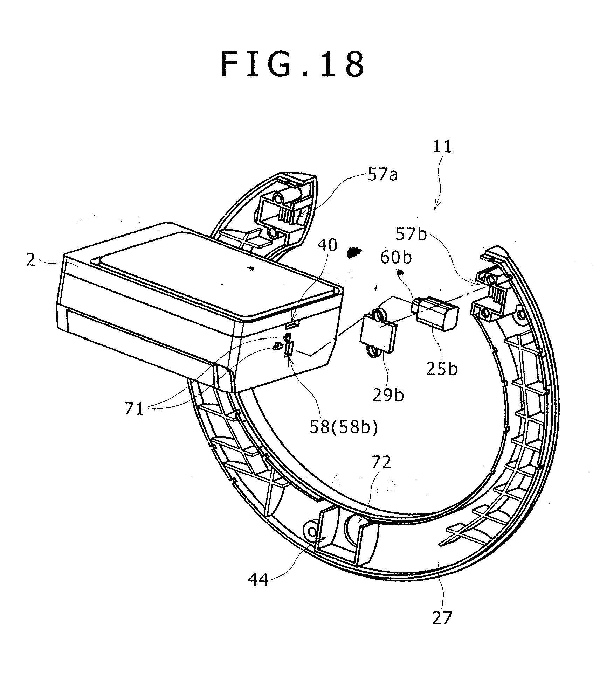

FIG. 18 is an exploded perspective view of part of the ring section and part of the terminal body section after assembly when the terminal body section is mounted on the ring section of the mobile phone terminal according to this embodiment; and

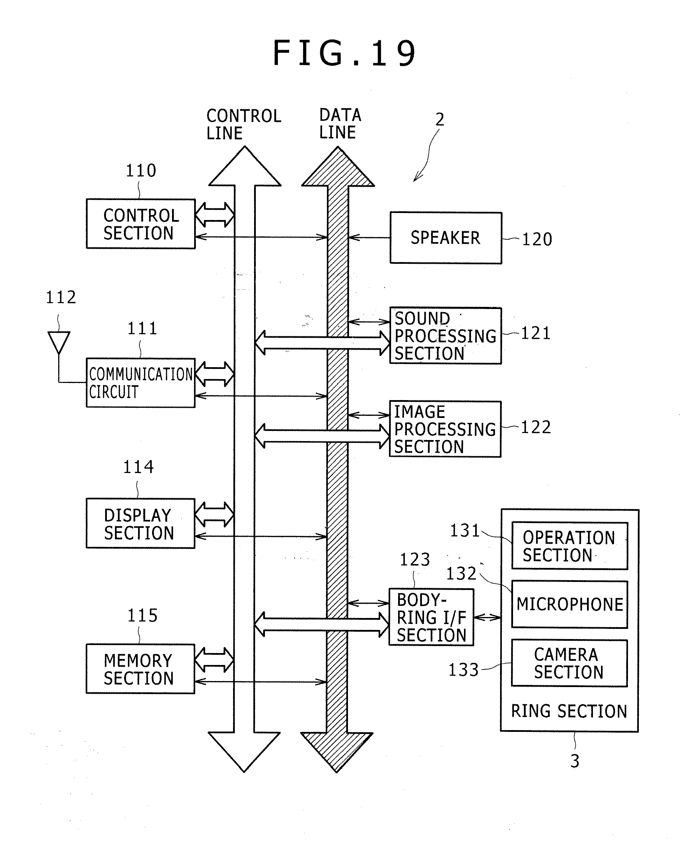

FIG. 19 is a schematic block diagram of the mobile phone terminal according to this embodiment.

### DESCRIPTION OF THE PREFERRED EMBODIMENTS

Hereinafter, an embodiment of the present invention will be described with reference to the accompanying drawings.

In the following embodiment, a bracelet-type mobile phone terminal is taken as an example of the application of a mobile terminal according to an embodiment of the invention. Needless to say, any content described herein is only provided as an example and the invention is thus not limited to such an example.

### [General Configuration of Mobile Phone Terminal of This Embodiment]

As shown in the accompanying drawings starting from FIG. 1, a mobile phone terminal 1 according to this embodiment is composed of a terminal body section 2 and a ring section 3.

The terminal body section 2 includes a main circuit board for implementing various functions that mobile phone terminals typically have such as a wireless communication function for telephone calls and data communication; a display device 4 which is a liquid crystal display, an organic electroluminescent (EL) display, or the like, and displays a standby screen, a menu operation screen, an e-mail display screen, a television program screen, etc.; a battery for supplying power to the mobile phone terminal; and a speaker for outputting various kinds of sounds such as receiving voice, ringer tones, and reproduced music, in the enclosure. In this embodiment, at least the receiving speaker is disposed on the opposite side to the surface where the display device 4 is disposed.

The ring section 3 is constructed of a substantially circular (or substantially oval) enclosure shaped like a bracelet, and has an inner diameter large enough to accommodate at least a user's wrist, like a bracelet. The ring section 3 also includes an operation device section composed of a plurality of key buttons 5 to 8 handled when a user operates the mobile phone terminal 1, a camera section 9 for photo shoot, and a microphone 10 for input of transmitting voice.

The enclosure of the ring section 3 is formed in a state where an arc portion of the ring circumference direction is cut off. In this embodiment, the terminal body section 2 is mounted to a cutoff section 11 formed by cutting off the arc portion in such a manner as to be rotatable at a rotation angle of at least 90 degrees with a rotation axis substantially parallel to the tangent line of the ring circumference direction of the cutoff section 11. In this embodiment, the cutoff section 11 includes a pair of hinges at a pair of wall surface portions which are perpendicular to the ring circumference direction and face each other, and the terminal body section 2 is journaled through the use of the hinges.

That is, the terminal body section 2 is mounted to the cutoff section 11 of the ring section 3 through the hinges in such a manner as to be rotatable at a rotation angle of at least 90 degrees from a direction in which the display surface of the display device 4 is substantially perpendicular to a two-dimensional plane including the circumference of the ring section 3 and the ring center as shown in FIGS. 1 to 6 to a direction in which the display surface of the display device 4 is substantially parallel to the two-dimensional plane including the circumference of the ring section 3 and the ring center as shown in FIGS. 7 to 13.

The rotation angle for rotating the terminal body section 2 with respect to the ring section 3 is not limited to 90 degrees, and may be, e.g., 180 degrees, 270 degrees, 360 degrees (one revolution), or any other arbitrary angle. The cutoff section 11 of the ring section 3 and the mounting portion of the terminal body section 2 will be detailed later.

In this embodiment, the cutoff section 11 formed by completely cutting off the arc portion of the ring circumference direction of the ring section 3 is taken as an example. However, if there is a need for reinforcement or the like in terms of strength or design, a bridge member for bridging the cutoff section 11 may bridge the cut-off arc portion of the ring section 3. In this case, the bridge member is so formed as not to hamper the rotation of the terminal body section 2.

In this embodiment, at least signal transmission can be performed between the ring section 3 and the terminal body section 2. The signal transmission between the ring section 3 and the terminal body section 2 is performed through, e.g., a flexible board, an electrical cable, an electrical contact, optical communication, or radio waves.

In the case where the flexible board or the electrical cable is used for signal transmission, it is desirable to make wiring loose to such a degree as to prevent the breakage of the flexible board or the electrical cable in rotating the terminal body section 2 with respect to the ring section 3 and also provide a rotation angle control mechanism (stopper) for controlling the rotatable angle of the terminal body section 2 with respect to the ring section 3.

In the case where the optical communication is used for signal transmission, e.g. photodetectors are disposed at predetermined intervals on a circumference of rotation of the terminal body section 2 (at position intervals on circular arcs having a predetermined central angle) in one of an enclosure wall surface portion of the cutoff section 11 of the ring section 3 and an enclosure wall surface portion of the terminal body section 2 corresponding to the enclosure wall surface portion of the cutoff section 11, and e.g. one photodiode is disposed on the circumference of rotation in the other one. With this configuration, when the rotation of the terminal body section 2 is stopped, the light of the photodiode can be detected by one of the photodetectors.

Similarly, in the case where the electrical contact is used for signal transmission, e.g. electrical contacts are disposed at predetermined intervals on a circumference of rotation of the terminal body section 2 (at position intervals on circular arcs having a predetermined central angle) in one of an enclosure wall surface portion of the cutoff section 11 of the ring section 3 and an enclosure wall surface portion of the terminal body section 2 corresponding to the enclosure wall surface portion of the cutoff section 11, and e.g. one electrical contact is disposed on the circumference of rotation in the other one. With this configuration, when the rotation of the terminal body section 2 is stopped, an electrical contact on one of the enclosure wall surface portions can be electrically connected to the electrical contact on the other one.

Alternatively, in the case where the electrical contact is used for signal transmission, an annular electrical contact is disposed along the rotation direction of the terminal body section 2 with respect to the ring section 3 in one of an enclosure wall surface portion of the cutoff section 11 of the ring section 3 and an enclosure wall surface portion of the terminal body section 2 corresponding to the enclosure wall surface portion of the cutoff section 11, and e.g. one electrical contact is disposed on the circumference of rotation in the other one. With this configuration, the terminal body section 2 can rotate (i.e., slide) in a state where the one electrical contact is in touch with the annular electrical contact.

If signal transmission is performed through radio waves or optical communication, it is unnecessary to electrically connect between the terminal body section 2 and the ring section 3. However, in the case where the ring section 3 does not incorporate a battery, it is necessary to provide a flexible board, an electrical cable, or an electrical contact for supplying at least power from the terminal body section 2 to the ring section 3.

Further, in this embodiment, if signal transmission is performed through the radio waves or optical communication, since there is a constant and very short distance between the ring section 3 and the terminal body section 2, the power consumed for the radio waves or optical communication is very low, and the radio waves and the light of optical communication are not blocked by an obstacle and do not travel as far as others can intercept them.

Moreover, the ring section 3 and the terminal body section 2 may be removable. In this case, the signal transmission between the ring section 3 and the terminal body section 2 is performed through the electrical contact, optical communication, radio waves, or the like. Further, an electrical contact or the like for supplying power from the terminal body section 2 to the ring section 3 is provided as necessary.

Further, in this embodiment, the key buttons 5 to 8 of the ring section 3 are arranged, e.g., in an arc on a surface substantially parallel to the two-dimensional plane including the circumference of the ring and the ring center, and the camera section 9 and the microphone 10 are disposed, for example, on the opposite side to the surface where the key buttons 5 to 8 are disposed and an opposite arc portion facing the cutoff section 11. The camera section 9 and the microphone 10 may be disposed on the same surface as that of the key buttons 5 to 8. In this embodiment, the provision of particularly the camera section 9 to the ring section 3 enables the so-called "self-shooting" in which both the camera section 9 and the display surface of the display device 4 of the terminal body section 2 can face a user.

In this embodiment, the key buttons are divided into display-section operating keys 7 and 8 which can be used at the time of, for example, scrolling screen display on the display device 4 and input keys 5 and 6 which can be used for incoming/outgoing call instruction input, numeric/text input, power ON/OFF input, and the like.

Further, in this embodiment, an enclosure portion of the ring section 3 where the input keys 5 and 6 are disposed is formed like a plane surface substantially parallel to the two-dimensional plane including the circumference of the ring and the ring center, and an enclosure portion of the ring section 3 where the display-section operating keys 7 and 8 are disposed is formed like a plane surface slanting obliquely upward from the surface where the input keys 5 and 6 are disposed.

Further, the display-section operating keys 7 and 8 are disposed close to the cutoff section 11 where the terminal body section 2 is mounted, and disposed protruding from the enclosure surface of the ring section 3. That is, in this embodiment, in order to improve the operability (ease of pressing) when the mobile phone terminal 1 is operated with fingers of the other arm different from the arm on which the ring section 3 is worn like a bracelet by putting the ring section 3 on a user's arm or the like, particularly the display-section operating keys 7 and 8 are disposed close to the cutoff section 11 where the terminal body section 2 is mounted, and provided over the enclosure surface slanting obliquely upward from the surface where the input keys 5 and 6 are disposed. Further, the display-section operating keys 7 and 8 have some size and protrude from the enclosure surface of the ring section 3.

### [Appearance of Mobile Phone Terminal of This Embodiment and Use Example in Rotation of Terminal Body Section]

Hereinafter, the appearance of the mobile phone terminal according to this embodiment when the terminal body section 2 is rotated with respect to the ring section 3 will be described with reference to FIGS. 1 to 13.

FIGS. 1 to 6 are external views of the mobile phone terminal 1 according to this embodiment in a state where the terminal body section 2 is rotated such that the display surface of the display device 4 of the terminal body section 2 is substantially perpendicular to the two-dimensional plane including the circumference of the ring section 3 and the ring center. FIG. 1 is an external perspective view of the mobile phone terminal 1 in this state. FIG. 2 is an external perspective view of the mobile phone terminal 1 when the camera section 9 and the microphone 10 of the ring section 3 are turned upward. FIG. 3 is an external front view of the mobile phone terminal 1 in viewing the key buttons 5 to 8 (the display-section operating keys 7 and 8 and the input keys 5 and 6) of the ring section 3. FIG. 4 is an external rear view of the mobile phone terminal 1 in viewing the camera section 9 and the microphone 10 of the ring section 3. FIG. 5 is an external front view of the mobile phone terminal 1 in viewing the screen of the display device 4 of the terminal body section 2. FIG. 6 is an external side view of the mobile phone terminal 1 in viewing a side of the display device 4 of the terminal body section 2.

When the display surface of the display device 4 of the terminal body section 2 is substantially perpendicular to the two-dimensional plane including the circumference of the ring section 3 and the ring center as shown in FIGS. 1 to 6, the mobile phone terminal 1 according to this embodiment can be worn like a bracelet by putting the ring section 3 on a user's arm or the like, thereby improving the portability. When the user uses the mobile phone terminal 1 according to this embodiment in this state, the user can see the display surface of the display device 4 of the terminal body section 2 as in the case of viewing, e.g., the dial of a watch. Further, the user can operate the key buttons 5 to 8 with fingers of the other arm different from the arm on which the ring section 3 is worn, and particularly the display-section operating keys 7 and 8 facilitate operations such as screen scrolling.

On the other hand, FIGS. 7 to 12 are external views of the mobile phone terminal 1 according to this embodiment in a state where the terminal body section 2 is rotated such that the display surface of the display device 4 of the terminal body section 2 is substantially parallel to the two-dimensional plane including the circumference of the ring section 3 and the ring center. FIG. 7 is an external perspective view of the mobile phone terminal 1 in this state. FIG. 8 is an external front view of the mobile phone terminal 1 in viewing the key buttons 5 to 8 (the display-section operating keys 7 and 8 and the input keys 5 and 6) of the ring section 3. FIG. 9 is an external rear view of the mobile phone terminal 1 in viewing the camera section 9 and the microphone 10 of the ring section 3. FIG. 10 is an external side view of the mobile phone terminal 1 in viewing the top of the display device 4 of the terminal body section 2. FIG. 11 is an external side view of the mobile phone terminal 1 in viewing the camera section 9 and the microphone 10 of the ring section 3. FIG. 12 is an external side view of the mobile phone terminal 1 in viewing a side of the display device 4 of the terminal body section 2.

When the display surface of the display device 4 of the terminal body section 2 is substantially parallel to the two-dimensional plane including the circumference of the ring section 3 and the ring center as shown in FIGS. 7 to 12, that is, for example, when the ring section 3 is removed from the user's arm and the terminal body section 2 is rotated with respect to the ring section 3 such that the display surface of the display device 4 of the terminal body section 2 and the surface for disposing the key buttons 5 to 8 of the ring section 3 face in the same direction, as shown in FIG. 13 the user can hold the ring section 3 of the mobile phone terminal 1 according to this embodiment with both hands and can easily operate the key buttons 5 to 8 arranged in an arc on the ring section 3 with both thumbs. Further, the user easily can see the display surface of the display device 4 of the terminal body section 2 while operating the key buttons 5 to 8, that is, the user can perform key input with both hands, confirming both the screen and the keys. Thereby, the mobile phone terminal according to this embodiment greatly improves, e.g., the display of e-mail and the operability of text input, compared to the past bracelet-type mobile phone unit.

The key buttons may be provided not only on one side of the enclosure of the ring section 3 but also on both sides thereof. Thereby, the user can operate key buttons on the back side with the middle fingers, the index fingers, etc. as well as the thumbs.

Further, e.g., the same key buttons 5 to 8 may be provided on the front side and the back side of the ring section 3. In this case, even if the display surface of the display device 4 of the terminal body section 2 is turned in either direction of the front side or the back side of the ring section 3, the user can use the key buttons on either the front side or the back side of the ring section 3. Further, regardless of whether the user is right-handed and wears the ring section 3 on the left arm or the user is left-handed and wears the ring section 3 on the right arm, the user can operate the key buttons 5 to 8 (particularly the display-section operating keys 7 and 8) in the same way with fingers of the other arm different from the arm on which the ring section 3 is worn. As a matter of course, in this case, the user can wear the ring section 3 on a desired arm of either a left arm or a right arm, regardless of whether the user is right-handed or left-handed.

Moreover, in FIGS. 7 to 12, at the time of using the mobile phone terminal 1 according to this embodiment for a telephone call, the user can input the user's transmitting voice to the microphone 10 provided at substantially the center (remote from the terminal body section 2) of the ring section 3 while listening to receiving voice by putting the speaker provided on the back side (opposite side to the display surface) of the terminal body section 2 to the user's ear. In this case, since the user can make a telephone call by putting the speaker provided on the back side (opposite side to the display surface) of the terminal body section 2 to the ear, the display surface of the terminal body section 2 is not stained with sebum or the like.

In this embodiment, there is shown an example in which the microphone is provided on the ring section 3 and the speaker is provided on the terminal body section 2. However, the speaker may be provided on the ring section 3, and the microphone may be provided on the terminal body section 2. Further, the microphone and the speaker may be disposed on opposite positions of the ring center in the ring section 3.

### [Assembly Example of Mobile Phone Terminal of This Embodiment]

FIGS. 14 to 18 are schematic exploded perspective views of the mobile phone terminal 1 according to this embodiment. FIG. 14 is an exploded perspective view of the principal part of the ring section 3. FIG. 15 is an exploded perspective view of the principal part of the terminal body section 2. FIG. 16 is an exploded perspective view of part of the ring section 3 and part of the terminal body section 2 when the terminal body section 2 is mounted on the ring section 3. FIG. 17 is an exploded perspective view of part of the ring section 3 and part of the terminal body section 2 after partial assembly when the terminal body section 2 is mounted on the ring section 3. FIG. 18 is an exploded perspective view of part of the ring section 3 and part of the terminal body section 2 after assembly when the terminal body section 2 is mounted on the ring section 3.

As shown in FIG. 14, the enclosure of the ring section 3 is constructed by fitting a first exterior case 20 to a second exterior case 27. Within the enclosure of the ring section 3 constructed by fitting the first exterior case 20 to the second exterior case 27, there are included a key button sheets 21 and 22, the display-section operating keys 7 and 8, a flexible board 23, a camera device 24, hinge sections 25a and 25b, hinge latch plates 29a and 29b, as well as a key button board, a camera device board, and the microphone which are not shown in FIG. 14.

The key button sheet 21 is formed by molding key tops 55 of the input keys 5, 6 and a sheet section into one piece, using an elastic member such as rubber and elastomer. Similarly, the key button sheet 22 is formed by molding key tops 56 of the input keys 5, 6 and a sheet section into one piece, using an elastic member such as rubber and elastomer.

On the other hand, the display-section operating keys 7 and 8 are formed as key buttons separately from the key button sheets 21 and 22.

In the first exterior case 20, a plurality of button holes 45 to 48 are provided so that the key tops of the display-section operating keys 7 and 8 and the key tops 55 and 56 of the key button sheets 21 and 22 protrude outwardly from the inside of the enclosure. That is, in this embodiment, the key top of the display-section operating key 7 protrudes outwardly from the inside of the first exterior case 20 through the button hole 47. The key top of the display-section operating key 8 protrudes outwardly from the inside of the first exterior case 20 through the button hole 48. The key tops 55 of the key button sheet 21 protrude outwardly from the inside of the first exterior case 20 through the button holes 45. The key tops 56 of the key button sheet 22 protrude outwardly from the inside of the first exterior case 20 through the button holes 46.

Further, a key button board (not shown) is provided on the opposite side to the key top side of the display-section operating keys 7 and 8 and the key button sheets 21 and 22. The signal line of the key button board is electrically connected to the signal line of the flexible board 23.

The flexible board 23 is electrically connected at one contact 23a to the key button board and the camera device board, and electrically connected at the other contact 23b to a circuit board within the terminal body section 2 as will be shown in FIG. 17.

The camera device 24 is accommodated within a camera device accommodating section 44 provided in the second exterior case 27. Further, a circular hole 72 is provided in the camera device accommodating section 44 so that the lens of the camera section 9 faces outwardly.

The hinge section 25a is fixed within a hinge accommodating section 57a, for example, by screwing the hinge latch plate 29a in a state where the hinge body is accommodated in the hinge accommodating section 57a of the second exterior case 27. Similarly, the hinge section 25b is fixed within a hinge accommodating section 57b, for example, by screwing the hinge latch plate 29b in a state where the hinge body is accommodated in the hinge accommodating section 57b of the second exterior case 27. The hinge sections 25a and 25b have protrusions 60a and 60b respectively. The protrusions 60a and 60b are inserted into hinge receiving holes 58 provided on the side surfaces of the enclosure of the terminal body section 2 as will be shown in FIGS. 15, 16, and 18. Thereby, the terminal body section 2 is rotatably journaled to the cutoff section 11 of the ring section 3.

As shown in FIG. 15, the terminal body section 2 includes an enclosure case 36, a battery 37, a battery case 38, a board 35 for a SIM (Subscriber Identity Module) card slot and a memory card slot, a main circuit board 34, a sub-circuit board 33, a display device 32, a display case 31, a display cover 30, and a flexible board 39, as principal constituent elements. These constituent elements are assembled in the order shown in FIG. 15.

The battery 37 is loaded on the opposite side to where the display device 32 is mounted. The battery case 38 is fitted to the enclosure case 36 so as to cover the battery 37.

The board 35 for the SIM card slot and the memory card slot is disposed between the battery 37 loaded in the enclosure case 36 and the main circuit board 34 incorporated in the enclosure case 36. Further, a shield plate (not shown) is disposed in this portion.

The main circuit board 34 and the sub-circuit board 33 are circuit boards for implementing various functions that mobile phone terminals generally have such as a wireless communication function for telephone calls and data communication in the mobile phone terminal according to this embodiment and a function of display onto the display device 32.

The display device 32 is the above-described display device 4. The display device 32 is disposed within the display case 31 into which the display cover 30 is fitted, and the display case 31 is fitted to the enclosure case 36.

A signal pattern for transmitting, e.g., SIM information to the main circuit board 34 is formed on the flexible board 39.

As shown in FIGS. 16 to 18, the terminal body section 2 assembled as shown in FIG. 15 is journaled to the cutoff section 11 of the ring section 3 assembled as shown in FIG. 14 through the hinge sections 25a and 25b. For simplicity, FIGS. 16 to 18 show some of the constituent elements of the ring section 3 and the terminal body section 2. FIG. 16 shows disassembly of some constituent elements of the ring section 3 and the terminal body section 2.

FIG. 17 shows the second exterior case 27 of the ring section 3 and the terminal body section 2 that is partially assembled. The other contact 23b of the flexible board 23 is electrically connected to the main circuit board 34 in the terminal body section 2 through a flexible board hole 40 provided on a side surface of the enclosure case 36. In this case, since the flexible board 23 is used for the signal transmission between the ring section 3 and the terminal body section 2, the flexible board 23 and the flexible board hole 40 are made loose to such a degree as to prevent the breakage of the flexible board 23 in rotating the terminal body section 2 with respect to the ring section 3. Further, in the example of FIGS. 16 to 18, rotation angle control mechanisms (stoppers 71) for controlling the rotatable angle of the terminal body section 2 with respect to the ring section 3 (e.g., within 90 degrees) are provided close to the hinge receiving holes 58 of the terminal body section 2.

In this embodiment, there is shown an example in which hinge sections 25 are provided in the ring section 3 and the hinge receiving holes 58 are provided in the terminal body section 2. However, the hinge receiving holes may be provided in the ring section 3, and the hinges may be provided in the terminal body section 2.

### [General Configuration of Mobile Phone Terminal]

FIG. 19 is a schematic block diagram of the mobile phone terminal 1 according to this embodiment.

In FIG. 19, a communication antenna 112 is, e.g., a built-in antenna, and transmits and receives signal waves for telephone calls and packet communication such as e-mail. A communication circuit 111 performs frequency conversion, modulation and demodulation on transmit and receive signals.

A speaker 120 acts as a receiving speaker disposed in the mobile phone terminal and a speaker for outputting ringer tones, alarm tones, beep tones, reproduced music, digital sound, sound of reproduced moving images, and the like. The speaker 120 converts a sound signal supplied from a sound processing section 121 into an acoustic wave in the air. In this embodiment, the speaker 120 is disposed in the terminal body section 2.

A microphone 132 acts as a transmitting microphone and a microphone for collecting external sound. The microphone 132 converts an acoustic wave into a sound signal and inputs the sound signal to the sound processing section 121. In this embodiment, the microphone 132 corresponds to the microphone 10 disposed in the ring section 3.

The sound processing section 121 performs digital-to-analog conversion on sound data generated by predetermined sound processing such as decoding, amplifies the converted signal, and outputs the amplified sound signal to the speaker 120. Further, the sound processing section 121 amplifies an input sound signal supplied from the microphone 132, performs analog-to-digital conversion on the amplified signal, and performs predetermined sound processing such as encoding on the analog-to-digital converted sound data.

An operation section 131 is composed of key buttons (display-section operating keys 7 and 8 and input keys 5 and 6) disposed in the ring section 3 of the mobile phone terminal according to this embodiment and an operation signal generation circuit for generating operation signals when these key buttons 5 to 8 are operated.

A display section 114 includes a display device such as a liquid crystal display or an organic EL display and a display drive circuit, and displays various texts and messages of e-mail, still images, moving images, and a standby screen on the display, based on image signals supplied from an image processing section 122.

The image processing section 122 performs the process of generating image signals for text, symbols, images, and the like displayed on the display section 114. The image processing section 122 also displays various user interface screens, web pages, and the like, under the control of a control section 110.

A memory section 115 includes a ROM (Read Only Memory) and a RAM (Random Access Memory). The ROM includes a rewritable storage medium such as a NAND-type flash memory, and stores an OS (Operating System) program, a control program for controlling each section by the control section 110, various kinds of application programs, compression-encoded music data contents, moving image data contents, various default settings, font data, dictionary data, model name information, terminal identification information, and the like. The RAM stores data at any time, as a work area where the control section 110 performs data processing.

A camera section 133 corresponds to the camera section 9 disposed in the ring section 3, and is composed of the camera device 24 and the camera device board.

A body-ring interface section (I/F section) 123 is an interface for signal transmission between the ring section 3 and the terminal body section 2.

The control section 110 is composed of a CPU, and performs control of communication in the communication circuit 111, sound processing and the control thereof, image processing and the control thereof, other various kinds of signal processing, and control of each section. Further, the control section 110 executes various application programs stored in the memory section 115 and data processing associated therewith.

Further, although not shown in FIG. 19, the mobile phone terminal 1 according to this embodiment also includes constituent elements provided in typical mobile phone terminals, such as key lights of the ring section 3; an LED (Light Emitting Diode) for an incoming light and a driver thereof provided in, e.g., the terminal body section 2; a near field communication section for performing near field communication by the so-called Bluetooth (registered trademark) system, the UWB (Ultra Wide Band) system, the wireless LAN (Local Area Network), or the like provided in, e.g., the terminal body section 2; a contactless communication processing section having a contactless IC card function and a reader/writer function; a GPS (Global Positioning System) communication section; an external-memory slot; a tuner for receiving digital broadcasts; an AV codec; and a timer.

Moreover, in the case where a photodiode and photodetectors for optical communication are disposed at predetermined intervals on a circumference of rotation of the terminal body section 2 with respect to the ring section 3 (at position intervals on circular arcs having a predetermined central angle) or electrical contacts are disposed at predetermined intervals on the circumference of rotation to implement the body-ring interface section (I/F section) 123 in the mobile phone terminal according to this embodiment, the control section 110 can determine a rotation angle of the terminal body section 2 with respect to the ring section 3 by monitoring which photodetector or electrical contact is used for signal transmission in the body-ring interface section (I/F section) 123.

Thus, if the control section 110 can determine the rotation angle of the terminal body section 2 with respect to the ring section 3, the control section 110 can suitably change a display content (e.g., a display direction) on the display section 114 in accordance with the rotation angle. That is, when the terminal body section 2 with respect to the ring section 3 is in such a state as shown in FIG. 1, i.e., it is assumed that the ring section 3 is worn on the user's arm, the control section 110 can perform control so as to switch to portrait display on the display section 114 (display device 4). Further, when the terminal body section 2 with respect to the ring section 3 is in such a state as shown in FIG. 13, the control section 110 can perform control so as to switch to landscape display on the display section 114 (display device 4). Thereby, in the mobile phone terminal 1 according to this embodiment, in either case where the ring section 3 is worn on the user's arm or the user holds the ring section 3 with both hands, it becomes possible to achieve screen display that is easy to see for the user.

Further, the control section 110 can suitably change a display content (e.g., a display direction) on the display section 114 when there is a predetermined input, e.g., through the key buttons 5 to 8 of the ring section 3. Assume that the key buttons 5 to 8 typically face on the arm side (or typically face on the hand side), regardless of whether the user wears the ring section 3 on the left or right arm. In this case, it is desirable to switch the display direction of the display section of the terminal body section 2 depending on whether the user wears the ring section 3 on the right arm or the left arm. In the mobile phone terminal according to this embodiment, by changing a display content on the display section 114 when there is a predetermined input through the key buttons 5 to 8, the user can easily see the screen of the terminal body section 2 and can easily operate the key buttons 5 to 8 of the ring section 3 in either case where the user wears the ring section 3 on the left or right arm.

### [Summary]

As described above, in the mobile phone terminal according to this embodiment, the terminal body section 2 can be rotated with respect to the ring section 3. Therefore, when the mobile phone terminal is worn like a bracelet by putting the ring section 3 on the user's arm or the like, the portability of the mobile phone terminal is improved, and the user can see the display surface of the display device 4 of the terminal body section 2 and can operate the key buttons 5 to 8 with fingers of the other arm different from the arm on which the ring section 3 is worn. On the other hand, when the ring section 3 is removed from the arm, the user easily can see the display surface of the display device 4 of the terminal body section 2 while holding the ring section 3 with both hands and operating the key buttons 5 to 8, which can achieve high operability and convenience. Further, the mobile phone terminal according to this embodiment is the bracelet-type terminal composed of the ring section 3 and the terminal body section 2 and has a good appearance.

Further, in the mobile phone terminal according to this embodiment, the signal transmission between the ring section 3 and the terminal body section 2 is performed through a flexible board, an electrical cable, and an electrical contact or through optical communication, radio waves, or the like in a state where there is a very short and constant distance between the cutoff section 11 of the ring section 3 and the terminal body section 2 and there is no room for an obstacle to get in between the ring section 3 and the terminal body section 2. Therefore, the mobile phone terminal can be achieved at a low cost with low power consumption, a small size, and a simple structure, without crosstalk with other mobile phone units and radio intercept.

The description of the above embodiment is only provided as an example in accordance with the invention. Therefore, the invention is not limited to the above embodiment. Within the scope of the gist of the invention, additionally, various modifications may be allowed depending on designs and so on.

The communication apparatus according to this embodiment is not limited to a mobile phone terminal, but also can be applied to a bracelet-type PDA (Personal Digital Assistant), a wearable computer, a bracelet-type video game apparatus, a bracelet-type digital receiver, a navigation apparatus, and the like.

## Claims

1. A mobile terminal comprising:
a ring section having a plurality of operation devices provided on a substantially circular enclosure;
a terminal body section having at least a display device;
a pair of hinge sections which have a rotation axis substantially parallel to a tangent line of a ring circumference direction of the ring section and rotatably journal the terminal body section at a rotation angle of at least 90 degrees with respect to the ring section; and
a body-ring interface section which performs at least signal transmission between the ring section and the terminal body section.

2. The mobile terminal according to Claim 1, wherein the hinge sections rotatably journal the terminal body section at a rotation angle of at least 90 degrees from a direction in which a display surface of the display device is substantially perpendicular to a two-dimensional plane including a circumference of the ring section and a ring center to a direction in which the display surface of the display device is substantially parallel to the two-dimensional plane including the circumference of the ring section and the ring center.

3. The mobile terminal according to Claim 1 or 2, wherein
the ring section includes a cutoff section formed by cutting off an arc portion of the ring circumference direction,
the cutoff section includes a pair of wall surface sections which are substantially perpendicular to the ring circumference direction of the ring section and face each other, and
the hinge sections include hinge bodies accommodated in either the wall surface sections of the cutoff section or wall surface sections of the terminal body section respectively corresponding to the wall surface sections of the cutoff section and protrusions inserted into hinge receiving holes provided in the other wall surface sections than the wall surface sections accommodating the hinge bodies.

4. The mobile terminal according to any of Claims 1 to 3, wherein the operation devices of the ring section are arranged in an arc on a surface substantially parallel to the two-dimensional plane including the circumference of the ring section and the ring center.

5. The mobile terminal according to any of Claims 1 to 4, wherein in a predetermined operation device among the operation devices arranged on the ring section, a portion operated by a user is disposed protruding from an enclosure surface of the ring section.

6. The mobile terminal according to any of Claims 1 to 5, wherein one of the terminal body section and the ring section includes a transmitting microphone, and the other one of the terminal body section and the ring section includes a receiving speaker.

7. The mobile terminal according to any of Claims 1 to 6, wherein the ring section includes a camera section.
